# EUROPEAN PATENT APPLICATION

(11) **EP 0 762 588 A1**
(43) Date of publication of application: **12.03.1997**
(21) Application number: 96610032.3
(22) Date of filing: 09.09.1996
(51) Int. Cl.: H02G 3/22, H02G 15/007, H01R 13/58

(54) **A tension relief member for use in the insertion of cables into cable junction boxes**

(30) Priority: 07.09.1995 NO 953520
(71) Applicant: LK A/S, DK-2750 Ballerup (DK)
(72) Inventor: Andersen, Dennis Normann, 2200 Copenhagen K (DK); Toft, Henning, 1806 Frederiksberg C (DK)
(74) Representative: Wittrup, Flemming

(57) **Abstract**

A tension relief member (2) for a cable junction box to secure a lead-in cable (1) comprises a gripper part (4-6), a stop device and a resilient blocking device (7). The gripper part (4-6) has resilient locking parts (5, 6) by means of which the tension relief member (2) may be secured releasably to the cable junction box in connection with an opening in it. The clamping device allows movement of the cable (1) in one direction into the cable box. The blocking device (7) offers resistance to the cable when it has been moved a distance into the cable lead-in passage.

## Description

The invention concerns a tension relief member to be mounted in an opening in the wall of a cable junction box or the like, whereby the electrical connection in the junction box is relieved of tension in that the tension relief member clamps the cable sheath and thereby transfers a tensile load from the sheath of the cable to the housing of the cable box. The tension relief part is of the type defined in the introductory portion of claim 1.

Many different embodiments of such tension relief members are known, and it is common to these that the cable can be moved relatively freely past the locking plates or arms of the tension relief member in a direction toward the junction box, while it is almost impossible to pull the cable out of it.

As the locking plates or arms have a relatively great rigidity, a rather great force has to be applied to flex the locking plates or arms when the cable end itself is to be inserted, which makes it difficult for the operator to position the cable correctly without watching the actual insertion visually. Therefore, a too long cable section is frequently inserted into the box, and this section must therefore be cut off.

The object of the invention is to provide a tension relief member which allows control of the cable insertion in such a manner that the cable end can be positioned correctly.

This object is achieved in that the tension relief member of the invention has the constructive features defined in the characterizing portion of claim 1. This ensures that the cable end, when it has passed the locking plates or arms during the insertion and slides freely, again encounters mechanical resistance when it meets the resilient blocking device. The operator will hereby know with certainty how far the cable end has been inserted.

Claim 2 defines an embodiment of the tension relief member of the invention which gives a great saving in material, as the rigidity of the member is provided solely by a ring which engages the outer wall of the junction box, and which is kept in position by hooks in the form of locking bosses on resilient arms. Claim 3 states that the locking plates are in the form of inwardly extending, resilient clamping arms.

Claim 4 states that the clamping arms moreover carry the locking bosses, so that the engagement of the locking bosses with the inner wall of the junction box imparts increased rigidity to the clamping arms, allowing the required clamping force to be established with a smaller wall thickness.

Claims 5-9 define expedient embodiments of the blocking device, which is advantageously U-shaped. When the central part of the strap is allowed to have the shape of a beam positioned as a secant in the cable lead-in passage, the resilience of the strap may be controlled by dimensioning of the resilience of the strap.

The arms of the strap may advantageously be constructed so as to be formed by thin and relatively wide beam portions. When the arms are moreover attached to the ring offset from the diameter thereof, the faces of the arms, when aligned with the inner side of the ring, will form an angle with each other, so that when a given load is applied to the strap in the axial direction of the cable lead-in passage, the strap will bend outwards or burst so that the cable can pass.

The strap may advantageously have three straight portions which merge into each other via sharp bends, since this structure can be produced most easily by plastics injection moulding. However, curved beam portions will ensure the same good function.

The invention will be described below in connection with preferred embodiments and with reference to the drawing, in which:
fig. 1 is a schematic and cross-sectional view of a preferred embodiment of a tension relief member of the invention mounted in a wall of a cable junction box;
fig. 2 is a rear view of the tension relief member shown in fig. 1;
fig. 3 is a front view of the tension relief member shown in fig. 1;
fig. 4 is a cross-sectional view along the line IV-IV in fig. 3; and
fig. 5 is a cross-sectional view along the line V-V in fig. 3.

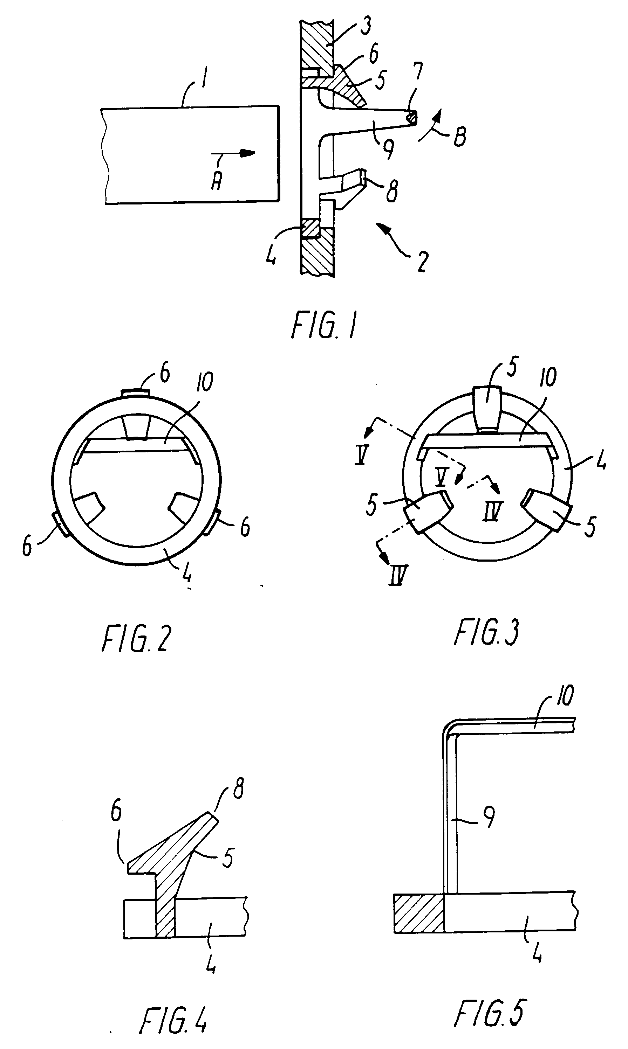

Figs. 1-5 show a preferred embodiment of a tension relief member 2 of the invention, and it is mounted in an opening in a cable junction box 3 or the like. The opening will usually be circular, and the shown edge is moreover stepped.

The tension relief member 2 has a gripper part with a central cable lead-in passage. The gripper part has a ring-shaped part 4 with a face engaging the external wall of the cable junction box, and hooks in the form of resilient arms 5 with locking bosses 6. The arms 5 extend from the ring-shaped part 4 into the cable lead-in passage in the axial direction, and grip the internal wall of the cable junction box with the locking bosses 6. The tension relief member 3 can be snapped on to the cable junction box.

The tension relief member has a clamping device which allows the cable to move in a direction into the cable box, and which prevents the cable from being pulled out again. The clamping device is provided in connection with the cable lead-in passage, and in the embodiment shown it comprises three obliquely inwardly extending clamping arms which converge toward a point positioned within and in extension of the cable lead-in passage of the gripper part. In the embodiment shown, the resilient arms 5 with the locking bosses 6 have this function, as the tip 8 of the arms grip the cable 1.

As the resilient arms 5 are used as locking plates against the cable, the engagement of the locking bosses 6 with the inner wall of the junction box imparts increased rigidity to the arms 5, so that the necessary clamping force with respect to the cable may be established with a smaller wall thickness.

The tension relief member moreover has a partly resilient blocking device which is positioned at a distance from and in extension of the cable lead-in passage of the gripper part, preferably as a secant in the passage. The resilient blocking device comprises a U-shaped strap 7 which extends from the ring-shaped part 4.

The central part 10 of the strap 7 is positioned as a flexible beam crosswise in the cable lead-in passage. The arms 9 of the strap 7 extend in parallel with the axis of the cable lead-in passage and inwardly merge continuously into the ring-shaped part 4. The strap 7 is manufactured as thin and relatively wide beams, and the width of the arms of the strap 7 decreases from the ring-shaped part of the gripper part toward the central part of the beam. When, moreover, the arms 9 are secured on the ring 4 offset from the diameter thereof, the faces formed by the arms 9 will form an angle with each other when they are aligned with the internal upper side of the ring, so that when a given load is applied to the strap in the axial direction of the cable lead-in passage, the strap, after having first encountered a stop, will flex outwards or burst, thereby allowing the cable to pass. The line of intersection between the faces will usually be immediately outside the ring 4.

A lead or a cable 1 is moved inwards in the direction shown by the arrow A. When the cable reaches the strap 7, the strap may be bent in the direction of the arrow B or burst, thereby allowing the cable to pass. The operator will thus first have to apply a relatively great force to the cable 1 to force the resilient arms 5 outwards. Then, the further insertion will take place essentially without resistance until the cable reaches the strap 7. The operator can now check how far the cable has been advanced, and he will be able to press the cable past the strap or break it by a force which is small with respect to the one necessary to press the cable into the cable lead-in opening, but which is noticeably greater than the usual feed force.

## Claims

1. A tension relief member (2) for a cable junction box or the like to secure a lead-in cable (1), comprising:
a gripper part (4-6) having a cable lead-in passage, said gripper part (4-6) having resilient locking parts (5, 6) to lock/secure the tension relief part (2) releasably to the cable junction box in connection with an opening in it; and
a clamping lock provided in connection with the cable lead-in passage and allowing movement of the cable (1) in one direction and counteracting movement in an opposite direction;
**characterized** by moreover including a resilient blocking device (7) which is positioned at a distance from and in extension of the cable lead-in passage of the gripper part (4-6).

2. A tension relief member according to claim 1,
**characterized** in that the gripper part (4-6) comprises a ring-shaped part (4) having a face to engage the external wall of the cable junction box, and that the resilient locking parts (5, 6) comprise locking bosses (6) on respective resilient arms (5) which extend form the ring-shaped part (4) in the axial direction of the cable lead-in passage.

3. A tension relief member according to claim 1 or 2,
**characterized** in that the clamping lock has a plurality of obliquely inwardly extending clamping arms which converge toward a point positioned within and in extension of the cable lead-in passage of the gripper part.

4. A tension relief member according to claim 3,
**characterized** in that the resilient arms carrying said locking bosses moreover form clamping arms whose ends (8) grip the cable (1).

5. A tension relief member according to claim 1 or 2,
**characterized** in that the resilient blocking device comprises a U-shaped strap (7) which extends from the ring-shaped part (4) of the gripper part and inwards in extension of the cable lead-in passage.

6. A tension relief member according to claim 5,
**characterized** in that the central part (10) of the strap (7) is located transversely in the cable lead-in passage.

7. A tension relief member according to claim 5 or 6,
**characterized** in that the arms (9) of the strap (7) extend substantially in parallel with the axis of the cable lead-in passage.

8. A tension relief member according to claims 5-7,
**characterized** in that the strap (7) is manufactured as thin and relatively wide beams.

9. A tension relief member according to claim 8,
**characterized** in that the width of the arms (9) of the strap decreases from the ring-shaped part (4) of the gripper part toward the central part (10) of the strap.
